# DEMANDE DE BREVET EUROPEEN

(11) **EP 2 439 450 A1**
(43) Date de publication de la demande: **11.04.2012**
(21) Numéro de dépôt: 11183760.5
(22) Date de dépôt: 04.10.2011
(51) Int. Cl.: F23J 11/02, F23L 3/00, F23L 13/08, F23N 5/24, F16K 1/16

(54) **Appareil de combustion non étanche à gaz, à sécurité accrue**

(30) Priorité: 07.10.2010 FR 1058139
(71) Demandeur: GDF SUEZ, 92400 Courbevoie (FR)
(72) Inventeur: Ruillard, Romain, 94240 L'HAY LES ROSES (FR); Le Dean, Patrice, 95520 OSNY (FR)
(74) Mandataire: Novagraaf Technologies

(57) **Abrégé**

L'invention concerne un appareil de combustion non étanche à gaz comprenant une chambre de combustion (11), un ventilateur (10), un conduit d'arrivée d'air (21), un conduit (22) d'évacuation de gaz de combustion, et un dispositif de détection de fonctionnement (12) conçu pour piloter le ventilateur (10).

L'appareil de combustion de l'invention comprend en outre : un clapet (3) conçu pour établir ou interrompre, selon qu'il est en position ouverte ou fermée, une communication entre le conduit d'arrivée d'air (21) et un volume d'aération (V); un ressort de rappel (4) sollicitant en permanence le clapet (3) vers sa position fermée; et un moteur (5) conçu pour solliciter le clapet vers sa position ouverte en cas de fonctionnement normal de l'appareil de combustion, ce moteur (5) étant lui aussi piloté par le dispositif de détection de fonctionnement (12).

## Description

L'invention concerne, de façon générale, les appareils de combustion non étanches à gaz, et notamment les chaudières à gaz.

Plus précisément, l'invention concerne une appareil de combustion non étanche à gaz comprenant une chambre de combustion, un conduit d'arrivée d'air agencé pour fournir à la chambre de combustion, en état de fonctionnement, de l'air comburant provenant d'un volume d'aération externe à l'appareil de combustion, un ventilateur conçu pour être sélectivement placé dans un état de fonctionnement ou de non fonctionnement et provoquant, en fonctionnement, une circulation d'air comburant depuis le conduit d'arrivée d'air vers la chambre de combustion, un conduit d'évacuation de gaz de combustion, et un dispositif de détection de fonctionnement sensible à l'état de fonctionnement de la chambre de combustion au moins dans son état de fonctionnement et conçu pour placer, en cas d'anomalie de fonctionnement, le ventilateur en état de non fonctionnement.

Des appareils de combustion de ce type sont bien connus de l'homme du métier et sont notamment utilisées pour équiper les différents appartements des habitations collectives.

Dans la plupart des cas, le volume d'aération externe à l'appareil de combustion est au moins partiellement constitué par un espace habitable, ce qui implique la nécessité d'éviter toute contamination gazeuse de ce volume d'aération.

Les solutions connues ne permettant pas de supprimer ce risque de façon efficace dans tous les cas de figure, la présente invention a pour but de proposer un appareil de combustion non étanche à gaz répondant de façon plus complète au besoin de sécurité.

A cette fin, l'appareil de combustion de l'invention, par ailleurs conforme à la définition générique qu'en donne le préambule ci-dessus, est essentiellement caractérisé en ce qu'il comprend en outre un clapet, un ressort de rappel, et un moteur, en ce que le clapet est installé sur le conduit d'arrivée d'air et conçu pour adopter sélectivement une configuration ouverte, dans laquelle le conduit d'arrivée d'air communique avec le volume d'aération, et une configuration fermée, dans laquelle le conduit d'arrivée d'air est isolé par rapport au volume d'aération, en ce que le ressort de rappel est conçu pour exercer une force de rappel élastique sollicitant en permanence le clapet vers sa configuration fermée, en ce que le moteur est conçu pour adopter sélectivement un état activé et un état désactivé et pour placer, dans son état activé, le clapet en configuration ouverte à l'encontre de la force de rappel du ressort, et en ce que le dispositif de détection de fonctionnement est également conçu pour placer le moteur dans son état activé aussi longtemps que le ventilateur est en état de fonctionnement.

Grâce à cet agencement, toute éventuelle panne du moteur ou coupure de l'alimentation électrique produit un retour du clapet dans sa configuration fermée sous l'effet de la force de rappel exercée par la ressort, et donc aussi un arrêt de l'appareil de combustion dont le ventilateur est placé dans son état de non fonctionnement.

L'invention est notamment applicable aux appareils de combustion du type de ceux dont le conduit d'évacuation de gaz de combustion est collectif et disposé dans le conduit d'arrivée d'air.

Le clapet comprend par exemple une pluralité de lamelles mobiles soumises chacune à la force de rappel du ressort et à une force antagoniste de maintien sélectivement exercée par le moteur dans son état activé.

Le moteur est avantageusement conçu pour adopter son état activé à réception d'un courant électrique d'alimentation.

Dans le mode de réalisation préféré de l'invention, le moteur est un actionneur électromagnétique qui, dans son état activé, est maintenu dans cet état par une force magnétique exercée par au moins un aimant permanent, et par une force électromagnétique engendrée par un courant électrique d'alimentation, la force de rappel du ressort étant alors supérieure à la force magnétique.

Cet agencement autorise l'utilisation d'un ressort de rappel puissant sans que le maintien du moteur dans son état activé entraîne une consommation d'énergie importante.

D'autres caractéristiques et avantages de l'invention ressortiront clairement de la description qui en est faite ci-après, à titre indicatif et nullement limitatif, en référence aux dessins annexés, dans lesquels .

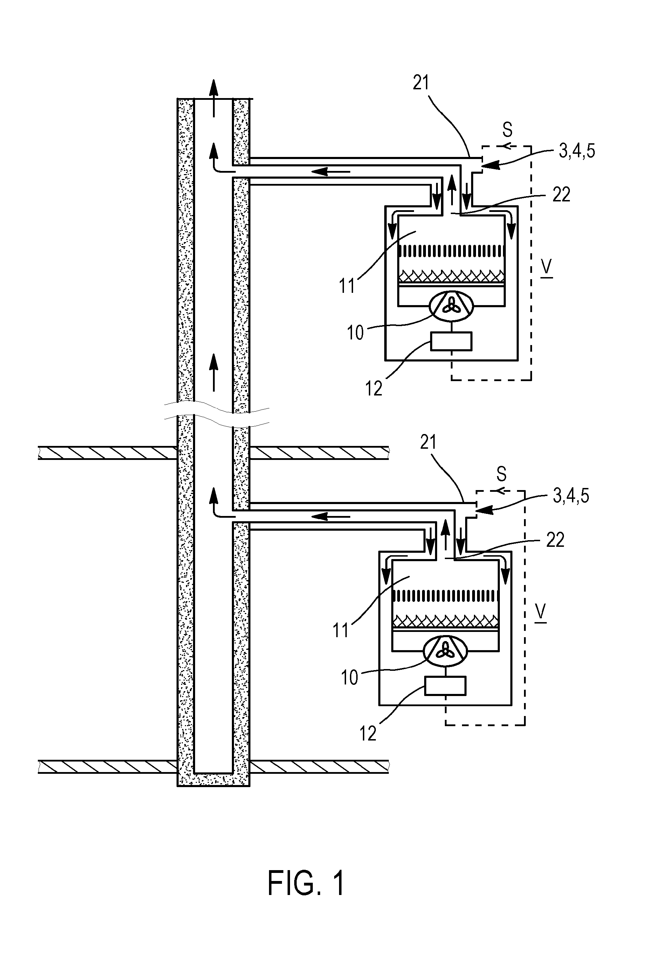

- la figure 1 est une vue schématique en coupe verticale d'une partie d'un habitat collectif utilisant des appareils de combustion conformes à l'invention, dont la chambre de combustion est représentée en état de fonctionnement;
- la figure 2 est une vue schématique en coupe d'un clapet motorisé utilisé dans un appareil de combustion conforme à l'invention et illustré en configuration ouverte; et
- la figure 3 est une vue schématique en coupe d'un clapet motorisé utilisé dans un appareil de combustion conforme à l'invention et illustré en configuration fermée.

Comme annoncé précédemment, l'invention concerne un appareil de combustion non étanche à gaz comprenant un ventilateur 10, une chambre de combustion 11, un conduit d'arrivée d'air 21, un conduit 22 d'évacuation de gaz de combustion, et un dispositif de détection de fonctionnement 12.

Le conduit d'arrivée d'air 21, qui communique par des entrées d'air (non visibles) avec la partie basse de la chambre de combustion 11, est agencé pour fournir à cette chambre 11, en fonctionnement, de l'air comburant qui provient d'un volume d'aération V externe à l'appareil de combustion.

Le ventilateur 10 est conçu pour être placé dans un état de fonctionnement ou de non fonctionnement et pour provoquer, dans son état de fonctionnement, une circulation d'air comburant depuis le conduit d'arrivée d'air 21 vers la chambre de combustion 11.

Le conduit 22 d'évacuation de gaz de combustion communique avec la partie haute de la chambre de combustion 11 et renvoie les gaz de combustion vers une cheminée ou une installation d'extraction de gaz.

L'invention est particulièrement applicable aux appareils de combustion dont le conduit 22 d'évacuation de gaz de combustion est commun à plusieurs habitations, c'est-à-dire collectif, et disposé dans le conduit 21 d'arrivée d'air, par exemple coaxialement à ce dernier.

Le dispositif de détection de fonctionnement 12, qui est par exemple constitué par un dispositif à électrode ou sonde d'ionisation, et qui est sensible à l'état de fonctionnement de la chambre de combustion 11, est conçu pour placer, en cas d'anomalie de fonctionnement, le ventilateur 10 en état de non fonctionnement.

L'appareil de combustion de l'invention comprend en outre un clapet 3, un ressort de rappel 4, et un moteur 5.

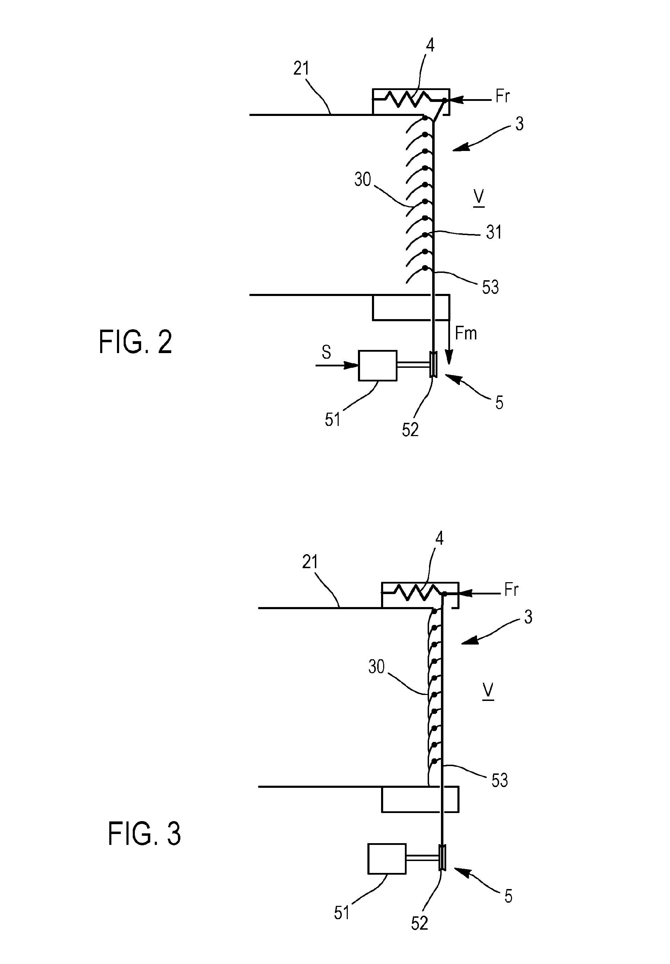

Le clapet 3, qui est installé sur le conduit d'arrivée d'air 21, entre ce conduit 21 et le volume d'aération V, peut adopter une configuration ouverte visible sur la figure 2, ou une configuration fermée visible sur la figure 3.

Dans sa configuration ouverte, le clapet 3 fait communiquer le conduit d'arrivée d'air 21 avec le volume d'aération V, tandis que, dans sa configuration fermée, ce clapet 3 isole le conduit d'arrivée d'air 21 par rapport au volume d'aération V.

Le ressort de rappel 4 est conçu pour exercer une force de rappel élastique Fr qui sollicite en permanence le clapet 3 vers sa configuration fermée.

Le moteur 5 est conçu pour adopter un état activé ou un état désactivé, ce moteur étant de préférence placé dans son état activé lorsqu'il est alimenté par un courant électrique S et retournant spontanément à son état désactivé par coupure de ce courant électrique d'alimentation S.

Le moteur 5 est en outre conçu pour exercer sur le clapet 3, lorsqu'il est dans son état activé, une force de maintien Fm qui place ce clapet 3 en configuration ouverte à l'encontre de la force de rappel Fr exercée par le ressort 4.

Par ailleurs, le dispositif de détection de fonctionnement 12 est conçu pour placer le moteur 5 dans son état activé aussi longtemps que le ventilateur 10 est en état de fonctionnement.

Le clapet 3, qui peut notamment prendre la forme d'un volet rectangulaire ou d'un iris circulaire, comprend par exemple une pluralité de lamelles mobiles 30 dont chacune est montée mobile à rotation autour d'un axe 31.

Le moteur comprend quant à lui, par exemple, un actionneur 51 tel qu'un actionneur électromagnétique rotatif, une poulie d'enroulement 52 sélectivement entraînée en rotation par l'actionneur 51, et un câble 53 sélectivement tiré par la poulie d'enroulement 52 et transmettant son mouvement de façon simultanée à l'ensemble des lamelles 30, à chacune desquelles il est lié.

La lamelle 30 la plus proche du ressort 4 est dotée d'un ergot lié à une extrémité du ressort 4, l'autre extrémité de ce ressort étant par exemple fixée au conduit 21.

Comme toutes les lamelles 30 sont liées entre elles par l'intermédiaire du câble 53, chacune des lamelles 30 est ainsi soumise en permanence à la force de rappel Fr du ressort 4, et est en outre soumise, lorsque le moteur 5 est dans son état activé, à la force antagoniste de maintien Fm qu'exerce l'actionneur 51 dans cet état activé.

Cette force de maintien Fm est calibrée pour pouvoir vaincre la force de rappel Fr, le moteur 5 n'exerçant en revanche qu'une force inférieure à la force de rappel Fr, et éventuellement nulle, lorsqu'il est dans son état désactivé.

Par exemple, l'actionneur 51 est un actionneur électromagnétique qui est conçu pour pouvoir être maintenu dans son état activé à la fois par une force magnétique exercée par un ou plusieurs aimants permanents, et par une force électromagnétique engendrée par le courant électrique d'alimentation S.

En d'autres termes, le moteur 5 comportant un tel actionneur 51 exerce, lorsqu'il est dans son état activé, une force de maintien Fm constituée par la somme de cette force magnétique et de cette force électromagnétique, et, lorsqu'il est dans son état désactivé, une force non nulle constituée par la seule force magnétique, la force de rappel du ressort 4 étant alors supérieure à la force magnétique.

## Revendications

1. Appareil de combustion non étanche à gaz comprenant une chambre de combustion (11), un conduit d'arrivée d'air (21) agencé pour fournir à la chambre de combustion (11), en état de fonctionnement, de l'air comburant provenant d'un volume d'aération (V) externe à l'appareil de combustion, un ventilateur (10) placé entre le conduit d'arrivée d'air (21) et la chambre de combustion (11) conçu pour être sélectivement placé dans un état de fonctionnement ou de non fonctionnement et provoquant, en fonctionnement, une circulation d'air comburant depuis le conduit d'arrivée d'air (21) vers la chambre de combustion (11), un conduit (22) d'évacuation de gaz de combustion, et un dispositif de détection de fonctionnement (12) sensible à l'état de fonctionnement de la chambre de combustion (11) au moins dans son état de fonctionnement et conçu pour placer, en cas d'anomalie de fonctionnement, le ventilateur (10) en état de non fonctionnement, **caractérisé en ce qu'**il comprend en outre un clapet (3), un ressort de rappel (4), et un moteur (5), **en ce que** le clapet (3) est installé sur le conduit d'arrivée d'air (21) et conçu pour adopter sélectivement une configuration ouverte, dans laquelle le conduit d'arrivée d'air (21) communique avec le volume d'aération (V), et une configuration fermée, dans laquelle le conduit d'arrivée d'air (21) est isolé par rapport au volume d'aération (V), **en ce que** le ressort de rappel (4) est conçu pour exercer une force de rappel élastique sollicitant en permanence le clapet (3) vers sa configuration fermée, **en ce que** le moteur (5) est conçu pour adopter sélectivement un état activé et un état désactivé et pour placer, dans son état activé, le clapet (3) en configuration ouverte à l'encontre de la force de rappel du ressort (4), et **en ce que** le dispositif de détection de fonctionnement (12) est également conçu pour placer le moteur (5) dans son état activé aussi longtemps que le ventilateur (10) est en état de fonctionnement.

2. Appareil de combustion suivant la revendication 1, **caractérisé en ce que** le conduit (22) d'évacuation de gaz de combustion est collectif et disposé dans le conduit (21) d'arrivée d'air.

3. Appareil de combustion suivant l'une quelconque des revendications précédentes, **caractérisé en ce que** le clapet (3) comprend une pluralité de lamelles mobiles (30) soumises chacune à la force de rappel du ressort (4) et à une force antagoniste de maintien sélectivement exercée par le moteur (5) dans son état activé.

4. Appareil de combustion suivant l'une quelconque des revendications précédentes, **caractérisé en ce que** le moteur (5) est conçu pour adopter son état activé à réception d'un courant électrique d'alimentation (S).

5. Appareil de combustion suivant la revendication 4, **caractérisé en ce que** le moteur (5) est un actionneur électromagnétique qui, dans son état activé, est maintenu dans cet état par une force magnétique exercée par au moins un aimant permanent, et par une force électromagnétique engendrée par le courant électrique d'alimentation (S), et **en ce que** la force de rappel du ressort (4) est supérieure à la force magnétique.
